# EUROPÄISCHE PATENTANMELDUNG

(11) **EP 4 810 794 A1**
(43) Veröffentlichungstag der Anmeldung: **23.09.2026**
(21) Anmeldenummer: 25165084.2
(22) Anmeldetag: 20.03.2025
(51) Int. Cl.: F03D 80/00, F03D 80/50

(54) **VORRICHTUNG ZUR REVERSIBLEN BEFESTIGUNG EINES ABDECKUNGSELEMENTS AN EINER KOMPONENTE EINER WINDENERGIEANLAGE IM STILLSTAND UND VERFAHREN**

(71) Anmelder: Wobben Properties GmbH, 26607 Aurich (DE)
(72) Erfinder: Arnold, Matthias, 26603 Aurich (DE); Stemberg, Jochen, 26607 Aurich (DE); Schumann, Klaas, 26524 Hage (DE); Attiah, Joe, 26605 Aurich (DE); Knoll, Jaap, 3774PL Kootwijkerbroek (NL)
(74) Vertreter: Eisenführ Speiser

(57) **Zusammenfassung**

Die Erfindung betrifft eine Vorrichtung und ein Verfahren, wobei es sich bei der Vorrichtung um eine Vorrichtung zur reversiblen Befestigung eines Abdeckungselements an einer Komponente einer Windenergieanlage im Stillstand, insbesondere eines Rotorblattes oder eines Turmes, handelt, wobei das Abdeckungselement an der Komponente anbringbar ausgestaltet ist und dazu ausgestaltet ist wenigstens einen Teil der Komponente abzudecken, umfassend eine an dem Abdeckungselement anordenbare Spannvorrichtung, und ein flexibles Element ausgestaltet als Befestigungselement zur reversiblen Befestigung der Spannvorrichtung und des Abdeckungselements an der Komponente der Windenergieanlage, wobei in einem montierten Zustand die reversible Befestigung besteht, wobei die Spannvorrichtung ausgestaltet ist das Abdeckungselement in dem montierten Zustand um die Komponente der Windenergieanlage zu spannen, und das Befestigungselement mehrere Schlaufen umfasst, wobei in dem montierten Zustand die mehreren Schlaufen wenigstens teilweise ineinandergreifend, insbesondere gehäkelt, ausgestaltet sind, wobei ineinandergreifend beschreibt, dass eine erste von zwei ineinandergreifend ausgestalteten Schlaufen durch eine zweite der zwei ineinandergreifend ausgestalteten Schlaufen führt.

## Beschreibung

Die vorliegende Erfindung umfasst eine Vorrichtung zur reversiblen Befestigung eines Abdeckungselements an einer Komponente einer Windenergieanlage im Stillstand, sowie ein Verfahren zur reversiblen Befestigung eines Abdeckungselements an einer Komponente einer Windenergieanlage im Stillstand.

Windenergieanlagen sind bekannt. Sie umfassen neben Turm und Gondel einen Rotor mit mehreren aerodynamischen Rotorblättern. Diese generieren bei passender Windanströmung einen Auftrieb, der zu einer Rotation des Rotors führt, welche wiederum einem Generator zur Stromproduktion dient. In bestimmten Situationen ist es erforderlich gewisse Komponenten der Windenergieanlage zumindest teilweise abzudecken. Beispielsweise bei dem Aufbau einer Windenergieanlage, bei einem Kranhub eines Rotorblattes, bei Wartungszuständen der Windenergieanlage, bei Reparaturen, im Havariefall oder beim Abbau der Windenergieanlage. Bei einer Einzelmontur werden die Rotorblätter eins nach dem anderen an einer Rotornabe befestigt. Sobald ein erstes Rotorblatt an der Rotornabe befestigt und Wind ausgesetzt ist, wird die aerodynamisch ausgestaltete Form des Rotorblatts wirksam. Durch anströmenden Wind werden beispielsweise Auftrieb und/oder Schwingungen am Rotorblatt generiert. Dies ist während des Aufbaus der Windenergieanlage jedoch äußerst hinderlich. Diese durch die aerodynamische Form des Rotorblatts auftretenden Kräfte wirken dem durch den Aufbau bedingten und gewünschten Stillstand des Rotors entgegen, was zu unnötigen Belastungen einzelner Komponenten bis hin zu Schäden oder Unfällen führen kann. Hier ist es gängige Praxis während des Kranhubs Führungsseile, auch Taglines genannt, und/oder ein Anti-Oscillation-Device, AOD, an dem Rotorblatt anzubringen, dass die aerodynamische Form des Rotorblatts derart bedeckt, dass keine bzw. kaum Kräfte durch den Wind an dem Rotorblatt generiert werden.

Als vorbekannte Lösungen sind hier einerseits Methoden zur punktuellen Befestigung am Rotorblatt zu nennen und andererseits Methoden zum Auffädeln eines Elements auf das Blatt. Im Bereich der punktuellen Befestigung werden nach aktuellem Stand der Technik Spanngurte um das Rotorblatt gespannt, die über einen Fernauslösbaren Karabiner geöffnet werden können. Eine solche Lösung ist geeignet hohe punktuelle Kräfte in das Blatt einzuleiten, ist aber aufgrund des Gewichts und der Komplexität ungeeignet, um langgestreckte Elemente entlang des Blattes zu befestigen.

Im Bereich der Befestigung langgestreckter Elemente wird üblicherweise die Lösung eines Auffädelns von der Blattspitze aus verwendet, siehe beispielsweise EP 2 507 513 B9. Hierbei müssen die üblicherweise am Blatt befindlichen Trailing Edge Serrations, TES, gesondert geschützt werden, siehe beispielsweise WO 2023 036 391 A1. Die Sicherung des Elements erfolgt hierbei durch eine Sicherungsleine zur Blattwurzel. Ein seitliches Entfernen ist bei dieser Lösung nicht möglich und Elemente im Bereich der Blattmitte müssen über die volle Länge des Blattes geführt werden.

Einen Hybrid stellen Methoden dar, bei denen das Element 2 Schlaufen aufweist, durch die dann eine Leine oder Stange gezogen wird. (z.B. beim Windenergieanlagenhersteller Lagerwey Wind BV zur Befestigung von Taglines eingesetzt). Dies hat für große Elemente den Nachteil, dass die Stange zusätzliches Gewicht einbringt bzw. die Leine sich verziehen und Blockieren kann.

Weiter vorbekannte Lösungen des Wettbewerbs sind beispielsweise aus den Dokumenten EP 3 112 667 B1, DK 179 394 B1, EP 3 795 824 A1, EP 4 063 645 A1 und EP 4 160 007 A1 bekannt.

Vor diesem Hintergrund lag der vorliegenden Erfindung die Aufgabe zugrunde eine optimierte oder alternative reversible Befestigungsvorrichtung für eine Abdeckung einer Komponente einer Windenergieanlage bereitzustellen, die eines der Probleme der vorbekannten Lösungen löst.

Gemäß einem ersten Aspekt der Erfindung wird die Aufgabe durch eine Vorrichtung zur reversiblen Befestigung eines Abdeckungselements an einer Komponente einer Windenergieanlage im Stillstand, insbesondere eines Rotorblattes oder eines Turmes, gelöst, wobei das Abdeckungselement an der Komponente anordenbar ausgestaltet ist und dazu ausgestaltet ist wenigstens einen Teil der Komponente abzudecken, umfassend eine an dem Abdeckungselement anordenbare Spannvorrichtung, und ein flexibles Element ausgestaltet als Befestigungselement zur reversiblen Befestigung der Spannvorrichtung und des Abdeckungselements an der Komponente der Windenergieanlage, wobei in einem montierten Zustand die reversible Befestigung besteht, wobei die Spannvorrichtung ausgestaltet ist das Abdeckungselement in dem montierten Zustand um die Komponente der Windenergieanlage zu spannen, und das Befestigungselement mehrere Schlaufen umfasst, wobei in dem montierten Zustand die mehreren Schlaufen wenigstens teilweise ineinandergreifend, insbesondere gehäkelt, ausgestaltet sind, wobei ineinandergreifend beschreibt, dass eine erste von zwei ineinandergreifend ausgestalteten Schlaufen durch eine zweite der zwei ineinandergreifend ausgestalteten Schlaufen führt.

Unter reversibler Befestigung wird erfindungsgemäß eine wieder lösbare Befestigung verstanden, derart, dass der Gegenstand, an dem die Befestigung stattfindet, nach dem Lösen der Befestigung in einem gleichen Zustand ist wie vor der Befestigung. Beispielsweise bleiben keine Bohrlöcher, oder strukturelle oder aerodynamische Schäden an dem Gegenstand zurück. Ein Beispiel für eine erfindungsgemäße reversible Befestigung ist ein Spannen oder Anbinden, insbesondere derart, dass die Befestigung aus einer Reibung, beziehungsweise einem Reibungswiderstand, zwischen der erfindungsgemäßen Vorrichtung und/oder dem Abdeckungselement und der Komponente der Windenergieanlage hervorgerufen wird.

Bei einer Komponente einer Windenergieanlage handelt es sich im Rahmen der Erfindung um einen Teil einer Windenergieanlage, beispielsweise ein Rotorblatt, ein Turm, eine Gondel und/oder eine Nabe. Es muss hierbei im montierten Zustand jedoch nicht die gesamte Komponente durch das Abdeckungselement abgedeckt sein. Die Erfindung umfasst auch Vorrichtungen zur Befestigung eines Abdeckungselements, das eine Komponente einer Windenergieanlage, beispielsweise ein Rotorblatt, im montierten Zustand nur teilweise bedeckt. Beispielsweise bedeckt das Abdeckungselement nur einen Teil des Turms oder nur einen Teil des Rotorblatts.

Bei dem Abdeckungselement handelt es sich vorzugsweise um eine Plane, ein Netz, ein Gitter, ein Tuch, eine Hülle oder ein Polster, jede weitere Art eines Abdeckungselements ist jedoch ebenfalls erfindungsgemäß umfasst. Die Erfindung umfasst ebenfalls Vorrichtungen zur reversiblen Befestigung von Abdeckungselementen, die aus einer Kombination mehrere Materialien bestehen. Das Abdeckungselement lässt sich an der Komponente anordnen, insbesondere derart, dass die Form des Abdeckungselements im Wesentlichen zu einer Oberfläche der Komponente derart passt, dass sie zumindest teilweise an der Oberfläche anliegt und/oder dass sich die Form des Abdeckungselements zumindest teilweise an die Oberfläche der Komponente anpasst, beispielsweise bei einer Plane oder einem Netz, dass um einen runden Körper gespannt wird.

Der Zustand einer Windenergieanlage im Stillstand wird erfindungsgemäß verstanden als ein Zustand, in dem die Windenergieanlage nicht zur Stromproduktion betrieben wird. Beispielsweise umfasst dieser Zustand einen Aufbau der Windenergieanlage, bei dem die Komponenten der Windenergieanlage am Standort zusammengesetzt werden, ein Trudelbetrieb der Windenergieanlage oder eine Reparatur der Windenergieanlage.

Die Vorrichtung ist jedoch ebenfalls dazu geeignet ein Abdeckungselement an Komponenten einer Windenergieanlage, wie beispielsweise einem Rotorblatt, reversibel zu befestigen, bevor diese Komponenten zu der Windenergieanlage zusammengesetzt werden. Beispielsweise also an einem Rotorblatt, das aus der Produktion kommt und zum Standort der Windenergieanlage transportiert wird. In der Praxis ist es oft praktischer eine Abdeckung an der Komponente anzubringen, bevor diese mit anderen Komponenten zur Windenergieanlage zusammengebaut wird.

Das Abdeckungselement ist dazu ausgestaltet, wenigstens einen Teil der Komponente abzudecken. Dies ist im Rahmen der Erfindung breit zu verstehen und umfasst nicht ausschließlich Planen, die die Komponente derart umschließen, dass eine Oberfläche der Komponente für Außenstehende nicht mehr sichtbar ist, sondern ebenfalls Netze und/oder Seile, die zumindest teilweise um die Komponente gespannt sind.

Eine erfindungsgemäße Vorrichtung umfasst eine Spannvorrichtung und ein flexibles Element. Es ist jedoch nicht ausgeschlossen, dass das Abdeckungselement ebenfalls Teil der erfindungsgemäßen Vorrichtung umfassend Spannvorrichtung und flexibles Element ist. Auch in dieser erfindungsgemäßen Ausgestaltung ist die Vorrichtung dazu ausgestaltet, das Abdeckungselement reversibel an einer Komponente einer Windenergieanlage zu befestigen.

Die an dem Abdeckungselement anordenbare Spannvorrichtung ist vorzugsweise mit Abdeckungselement verbindbar, beispielsweise durch ein Verknoten, Kleben, Nähen und/oder Tackern. Die Bezeichnung Spannvorrichtung impliziert, dass die Spannvorrichtung dazu ausgestaltet ist, den Gegenstand, an dem sie angebracht ist, also hier das Abdeckungselement, zu spannen. In einem Beispiel, in dem die Spannvorrichtung an dem Abdeckungselement angebracht ist und die Spannvorrichtung und das Abdeckungselement eine im Wesentlichen zylindrische Form, also beispielsweise einen Abschnitt des Turms, umspannen, geschieht das Spannen des Abdeckungselements durch die Spannvorrichtung beispielsweise durch eine Kraft, die durch eine Elastizität der Spannvorrichtung auf das Abdeckungselement ausgeübt wird. Hier ist die Spannvorrichtung selbst in einem gespannten Zustand. Dadurch, dass sich beispielsweise ein elastisches Material der Spannvorrichtung zusammenzieht, wird eine Kraft auf das Abdeckungselement ausgeübt, die das Abdeckungselement spannt. Alternativ oder zusätzlich umfasst die Spannvorrichtung in beispielhaften Ausführungen ein Spannelement, vorzugsweise ein Seilspanner oder ein Spannschloss, mit dem die durch die Spannvorrichtung ausgeübte spannende Kraft eingestellt werden kann.

Im Rahmen der vorliegenden Erfindung ist die Spannvorrichtung an dem Abdeckungselement allerdings anhand eines flexiblen Elements, ausgestaltet als Befestigungselement, angebracht. Das bedeutet, dass die Spannvorrichtung beispielsweise mit einem der obigen Mittel an einer ersten Stelle an dem Abdeckungselement angebracht ist. An dieser ersten Stelle kann diese Anbringung auch irreversibel sein, also derart, dass die Spannvorrichtung und/oder das Abdeckungselement an dieser ersten Stelle nicht ohne Schäden wieder getrennt werden können. Um bei den obigen Beispielen zu bleiben ist dies insbesondere bei einem Tackern der Fall. An einer zweiten Stelle ist die Spannvorrichtung an dem Abdeckungselement jedoch reversibel über das flexible Element angebracht. Diese Anbringung an der zweiten Stelle ist durch das flexible Element lösbar ausgestaltet.

Alternativ ist die Spannvorrichtung lediglich anhand des flexiblen Elements an dem Abdeckungselement angebracht. Bei einer Lösung, beziehungsweise Entfernung des flexiblen Elements besteht hier keine Verbindung zwischen der Spannvorrichtung und dem Abdeckungselement.

Die Bezeichnung "flexibles Element" definiert, dass es sich hierbei um ein nicht starres Element handelt. Das Element ist beispielsweise elastisch und/oder biegsam ausgestaltet, wie beispielsweise ein Seil, Band oder eine Schnur, das beziehungsweise verknotet werden kann, im Gegensatz zu einer Stange, deren Form ohne Zerstörung der Stange nicht geänderter werden kann.

Die Bezeichnung des flexiblen Elements als "Befestigungselement" impliziert, dass die Vorrichtung ohne das flexible Element nicht zur reversiblen Befestigung des Abdeckungselements an der Komponente geeignet ist. Zumindest nicht derart, dass die obige technische Aufgabe gelöst ist.

Der montierte Zustand wird erfindungsgemäß als ein Zustand verstanden, in dem die reversible Befestigung des Abdeckungselements durch die Vorrichtung an der Komponente der Windenergieanlage besteht. Mit anderen Worten, sind das Abdeckungselement und die Vorrichtung, umfassend Spannvorrichtung und flexibles Element, an der Komponente montiert und die Vorrichtung befestigt zweckgemäß das Abdeckungselement reversibel an der Komponente der Windenergieanlage. Dies trifft auch auf Ausführungen zu, in denen das Abdeckungselement als Teil einer Vorrichtung, umfassend Spannvorrichtung und flexibles Element, ausgestaltet ist. Eine solche Ausführung ist ebenfalls von der vorliegenden Erfindung umfasst.

Die Spannvorrichtung ist ausgestaltet das Abdeckungselement in dem montierten Zustand um die Komponente der Windenergieanlage zu spannen. Hierbei ist nicht zwingend erforderlich, dass die Spannvorrichtung und das Abdeckungselement einen gesamten Umfang der Komponente umspannen. In beispielhaften Ausführungsformen der Erfindung erstreckt sich das flexible Element über einen Teil des Umfangs der Komponente, über den sich weder die Spannvorrichtung, noch das Abdeckungselement erstreckt. Ein gesamter Umfang der Komponente wird in diesen beispielhaften Ausführungsformen dann durch Spannvorrichtung, Abdeckungselement und flexiblem Element umspannt.

Insbesondere ist das Spannen des Abdeckungselements in dem montierten Zustand um die Komponente durch die Spannvorrichtung derart zu verstehen, dass die Spannvorrichtung eine Kraft auf das Abdeckungselement auswirkt, durch die sich die Form des Abdeckungselements einer Oberfläche der Komponente anpasst. Bevorzugt ist die Kraft des Spannens des Abdeckungselements im montierten Zustand um die Komponente durch die Spannvorrichtung so groß, dass, durch auftretende Reibung zwischen der Spannvorrichtung und/oder des Abdeckungselements und der Komponente, eine Änderung der Position der Spannvorrichtung und des Abdeckungselements relativ zur Komponente nur unter größter Kraftanstrengung möglich ist. Eine Schwerkraft der Spannvorrichtung, des flexiblen Elements und des Abdeckungselements genügt hierfür nicht.

Das Befestigungselement umfasst mehrere Schlaufen. Als Schlaufe wird im Rahmen der vorliegenden Erfindung eine Masche, ein Auge im Sinne der Knotenkunde, beziehungsweise ein O-förmiges Stück verstanden. Das Auge, beziehungsweise O-förmige Stück, muss dabei weder perfekt rund, noch abgeschlossen sein. Als ineinandergreifende Schlaufen werden somit beispielsweise zwei Schlaufen verstanden, von denen eine Schlaufe, also ein O-förmiges Stück, durch die andere Schlaufe, also das O-förmige Stück, verläuft. Mehrere wenigstens teilweise ineinandergreifend ausgestaltete Schlaufen werden derart verstanden, als dass nicht gefordert ist, dass jede Schlaufe durch jede der anderen der mehreren Schlaufen verläuft, sondern, dass jede der mehreren Schlaufen wenigstens durch eine andere der mehreren Schlaufen verläuft.

Durch diese mehreren wenigstens teilweise ineinandergreifend ausgestalteten Schlaufen wird der Vorteil einer Befestigung, die ohne Metall oder anderen harten und schweren Materialien auskommt, und somit eine optimierte Lastverteilung entlang einer Strecke erreicht, die so aus dem Stand der Technik eines Spanngurtelements um das Blatt nicht hervorgeht.

In einer beispielhaften Ausführung verläuft jede von mehreren Schlaufen durch genau eine weitere der mehreren Schlaufen. Diese erfindungsgemäße Lösung ist aus dem Bereich der Textiltechnik (Häkeln) abgeleitet und findet in ähnlicher Form Verwendung zum Verschließen von Mehl-, Futter- oder Materialsäcken (Vernähen einer Öffnung). Beim Häkeln wird durch das Führen eines Fadens durch bereits gearbeitete Maschen ein Maschengebilde aus dem Faden erzeugt. Hierbei wird die Verbindungstechnik im Gegensatz zum Einsatz am Blatt keinen äußeren Lasten ausgesetzt.

Insbesondere sind die mehreren Schlaufen des Befestigungselements gehäkelt ausgestaltet. In dieser Ausgestaltung sind die mehreren Schlaufen als miteinander zu einem zusammenhängenden Maschengebilde verknüpfte Maschen zu verstehen. Eine beispielhafte gehäkelte Ausgestaltung resultiert insbesondere aus folgenden Schritten: Bilden einer ersten Schlaufe mit dem flexiblen Befestigungselement; Führen der ersten Schlaufe durch eine erste Aufnahme; Bilden einer zweiten Schlaufe mit dem flexiblen Befestigungselement; Führen der zweiten Schlaufe durch die durch die erste Aufnahme hindurchgeführte erste Schlaufe; Führen der zweiten Schlaufe durch eine zweite Aufnahme; Bilden einer weiteren Schlaufe mit dem flexiblen Befestigungselement und Führen der weiteren Schlaufe durch eine durch eine vorige Aufnahme einer Vielzahl von Aufnahmen hindurchgeführte vorige Schlaufe und Führen der weiteren Schlaufe durch eine weitere Aufnahme der Vielzahl von Aufnahmen solange, bis durch jede Aufnahme der Vielzahl von Aufnahmen eine Schlaufe führt, wobei durch die vorige Schlaufe nur die weitere Schlaufe führt; Bilden einer letzten Schlaufe mit dem flexiblen Befestigungselement; Führen der letzten Schlaufe durch eine durch eine letzte Aufnahme der Vielzahl von Aufnahmen hindurchgeführte vorletzte Schlaufe; Vorzugsweise zusätzlich: Anbringen eines Halterungselements an der durch die vorletzte Schlaufe hindurchgeführten letzten Schlaufe, wobei das Halterungselement ausgestaltet ist eine Umkehrung des vorherigen Schrittes des Führens der letzten Schlaufe durch die durch die letzte Aufnahme hindurchgeführte vorletzte Schlaufe zu verhindern und das Halterungselement mit einem Lösungselement verbunden ist, das ausgestaltet ist, die Anbringung des Halterungselements an der letzten Schlaufe zu lösen.

Eine Vergleichbare Verbindungstechnik kommt auch im Bereich von Zelten, insbesondere sogenannten "Schwarzzelt Jurten" zum Einsatz. Hier werden zwei Zeltbahnen ebenfalls durch ineinandergreifende Schlaufen, die durch Ösen gezogen werden, verbunden und die letzte Schlaufe gesichert. Im Gegensatz zur obigen beispielhaften Ausführung der Erfindung wird aber keine durchgehende Häkelleine verwendet, sondern es kommen jeweils Einzelschlaufen zum Einsatz. Hierdurch ist beim Einsatz an Zelten keine Möglichkeit zur Einhand- bzw. Fernöffnung gegeben, sondern es muss jede Schlaufe manuell aus derjeweiligen Öse gezogen werden. Dies wäre für den Einsatz am Rotorblatt in dieser Form nicht möglich und wird durch die obig beschriebene Ausführung der Erfindung ermöglicht.

Auch gibt es im Bereich des Segelsports eine vergleichbare Technik mit der Segel zur Lagerung am Baum festgebunden werden. Hierbei wird eine Leine jeweils so um das Segel gelegt, dass wechselweise im Uhrzeigersinn und gegen-Uhrzeigersinn Schlaufen um das Segel und den Baum platziert werden, dass sich an einer Kante eine entsprechende Häkellinie ergibt. Hierbei wird im Gegensatz zur vorliegenden Lösung das zu sichernde Element an jeder Schlaufe von entsprechend 2 Strängen vollständig umschlossen und nicht in die Verschnürung eingebunden.

Die vorliegende Erfindung dient zur temporären, beziehungsweise reversiblen, Befestigung eines Elements an einer Komponente einer Windenergieanlage, wie zum Beispiel einem Element zur Vermeidung von Rotorblattschwingungen an einem Rotorblatt während des Aufbaus der Windenergieanlage, insbesondere bei einer Einzelblattmontage und für teilerrichtete Zustände. Besondere Bedeutung hat die Nutzung der Erfindung für Zustände und Zeitpunkte zu denen der Pitch und/oder Yaw-Antrieb der Anlage nicht genutzt werden können, z.B. aufgrund fehlender Energieversorgung, nicht abgeschlossener Rotorblattfestigung, sowie bei Kollisions- oder Bewegungskonflikt mit dem Installationskran oder -ausrüstung.

Die Erfindung bezieht sich demnach auf eine Befestigungsmethodik zur temporären Anbringung eines Elements an einer Komponente einer Windenergieanlage, wie z.B. einer aerodynamisch wirksamen Störgeometrie im Bereich der Nasenkante eines Rotorblattes zur Vermeidung aerodynamisch angeregter Schwingungen. In einer weiteren beispielhaften Ausführung umfasst eine erfindungsgemäße Vorrichtung eine abschnittsweise um ein Rotorblatt spannbare Geometrie, die über eine Schnur gesichert ist. Die gespannten Teile des Elements beschreiben dabei an einer Kante entlang des Blattes eine Schlaufe, die durch eine Öse an der anderen Kante entlang des Blattes gezogen werden. Durch diese Schlaufen wird dann eine Schlaufe einer Verschlussleine so gelegt, dass die Schlaufe der Verschlussleine jeweils so durch die jeweils vorangegangene Schlaufe der Verschlussleine und die Schlaufe der Spannvorrichtung geführt wird, dass sich eine gehäkelte Reihe ergibt.

Der Anfang der Verschluss- oder Häkelleine ist in diesem Ausführungsbeispiel fest mit dem Element verbunden, so dass die Häkelleine auch zur Bergung des Elements dienen kann. Zur Bergung werden in diesem Ausführungsbeispiel durch ein Ziehen an der Häkelleine die Reihe von Schlaufen geöffnet, so dass sich nach öffnen jeder Schlaufe das Element am jeweiligen Blattschnitt entspannt. Hierdurch wird das Element in diesem Ausführungsbeispiel schrittweise vom Blatt gelöst.

Die vorliegende erfindungsgemäße Vorrichtung stellt somit eine einfachere Lösungsmöglichkeit einer temporären, beziehungsweise reversiblen, Befestigung eines Abdeckungselements an einer Komponente eines Rotorblatts vor dem Hintergrund des eingangs beschriebenen Standes der Technik bereit.

Überdies stellt die erfindungsgemäße Vorrichtung eine gewichtsreduzierte Alternative zum Stand der Technik dar, da das Befestigungselement flexibel ausgestaltet ist und somit ohne starre, schwere Ausgestaltungen des Befestigungselements, wie beispielsweise Metallkarabiner, auskommt. Dies reduziert das Gewicht des Befestigungselements und verringert somit zusätzliche durch die Vorrichtung auf die Komponente der Windenergieanlage wirkende Lasten.

Zusätzlich wird durch das Fehlen von Metall das Risiko von Unfällen, bei denen Teile der Vorrichtung aus großer Höhe herabfallen und Blitzschlag verringert.

Gemäß einer ersten vorteilhaften Ausgestaltung eines Aspekts der Erfindung, umfasst das Abdeckungselement mindestens eine Abdeckungsaufnahme, wobei das Befestigungselement in der mindestens einen Abdeckungsaufnahme aufnehmbar ausgestaltet ist, derart, dass in dem montierten Zustand das Befestigungselement durch die mindestens eine Abdeckungsaufnahme führt. Eine solche Abdeckungsaufnahme ist also nicht zur Aufnahme des Abdeckungselements ausgestaltet, sondern stellt eine an beziehungsweise in dem Abdeckungselement ausgestaltete Aufnahme zur Aufnahme eines weiteren Gegenstandes dar.

Das Befestigungselement ist wiederum zur Aufnahme in dieser mindestens einen Abdeckungsaufnahme ausgestaltet. Dies ist so zu verstehen, dass beispielsweise ein Durchmesser einer runden Abdeckungsaufnahme größer ist, als ein Durchmesser eines im Querschnitt runden Befestigungselements, insbesondere eines Seils. Das Befestigungselement ist also derart ausgestaltet, dass es durch die Abdeckungsaufnahme geführt werden kann. In dem montierten Zustand führt das Befestigungselement dann durch die mindestens eine Abdeckungsaufnahme. Umfasst das Abdeckungselement mehrere Abdeckungsaufnahmen, ist es jedoch nicht erforderlich, dass das Befestigungselement in dem montierten Zustand durch sämtliche dieser Abdeckungsaufnahmen führt.

Gemäß einer bevorzugten Variante der obigen Ausgestaltung, umfasst die Spannvorrichtung mindestens eine Spannaufnahme, wobei das Befestigungselement in der mindestens einen Spannaufnahme der Spannvorrichtung aufnehmbar ausgestaltet ist, derart, dass in dem montierten Zustand das Befestigungselement durch die mindestens eine Spannaufnahme der Spannvorrichtung führt. Eine solche Spannaufnahme ist also nicht zur Aufnahme der Spannvorrichtung ausgestaltet, sondern stellt eine an beziehungsweise in der Spannvorrichtung ausgestaltete Aufnahme zur Aufnahme eines weiteren Gegenstandes dar.

Das Befestigungselement ist wiederum zur Aufnahme in dieser mindestens einen Spannaufnahme ausgestaltet. Dies ist so zu verstehen, dass beispielsweise ein Durchmesser einer runden Spannaufnahme größer ist, als ein Durchmesser eines im Querschnitt runden Befestigungselements, insbesondere eines Seils. Das Befestigungselement ist also derart ausgestaltet, dass es durch die Spannaufnahme geführt werden kann. In dem montierten Zustand führt das Befestigungselement dann durch die mindestens eine Spannaufnahme. Umfasst die Spannvorrichtung mehrere Spannaufnahmen, ist es jedoch nicht erforderlich, dass das Befestigungselement in dem montierten Zustand durch sämtliche dieser Spannaufnahmen führt.

In dieser bevorzugten Variante der obigen Ausgestaltung führt das Befestigungselement in dem montierten Zustand also sowohl durch mindestens eine Abdeckungsaufnahme, als auch durch mindestens eine Spannaufnahme und stellt so eine temporäre Verbindung der Spannvorrichtung und des Abdeckungselements dar. Durch Entfernen des Befestigungselements löst sich diese Verbindung wieder.

Gemäß einer alternativen vorteilhaften Ausgestaltung eines Aspekts der Erfindung, umfasst das Abdeckungselement mindestens eine Abdeckungsaufnahme, wobei die Spannvorrichtung in der mindestens einen Abdeckungsaufnahme aufnehmbar ausgestaltet ist, derart, dass in dem montierten Zustand die Spannvorrichtung durch die mindestens eine Abdeckungsaufnahme führt und die Spannvorrichtung mindestens eine Spannaufnahme umfasst, wobei das Befestigungselement in der mindestens einen Spannaufnahme der Spannvorrichtung aufnehmbar ausgestaltet ist, derart, dass in dem montierten Zustand das Befestigungselement durch die mindestens eine Spannaufnahme der Spannvorrichtung führt.

Die Spannvorrichtung ist in der mindestens einen Abdeckungsaufnahme aufnehmbar ausgestaltet. Dies ist so zu verstehen, dass die Spannvorrichtung in dieser vorteilhaften Ausgestaltung zumindest abschnittsweise in einem Querschnitt eine geringere Ausdehnung als die mindestens eine Abdeckungsaufnahme aufweist, sodass die Spannvorrichtung zumindest abschnittsweise durch die Abdeckungsaufnahme geführt werden kann. Die Spannvorrichtung umfasst beispielsweise mindestens ein Seil mit einer Dicke kleiner der Ausdehnung der Abdeckungsaufnahme.

Besonders bevorzugt ist dabei, dass die Spannvorrichtung mindestens einen Verbindungsbereich umfasst, der in der mindestens einen Abdeckungsaufnahme aufnehmbar ausgestaltet ist und eine Spannaufnahme umfasst. Beispielsweise kann dies ein Seilende sein, an dem eine Schlaufe zur Aufnahme des Befestigungselements ausgebildet ist. Diese Schlaufe besitzt dabei bevorzugt Ausmaße, die es ermöglichen, die Schlaufe durch eine Abdeckungsaufnahme zu führen. In dem montierten Zustand führt die Schlaufe in diesem Beispiel durch die Abdeckungsaufnahme und das Befestigungselement führt durch die Schlaufe. Das Befestigungselement verhindert vorzugsweise eine Rückführung der Schlaufe durch die Abdeckungsaufnahme. So liegt eine temporäre, beziehungsweise reversible, Verbindung des Abdeckungselements mit der Spannvorrichtung vor. Durch Entfernen des Befestigungselements ist die Schlaufe in diesem Beispiel nicht mehr daran gehindert wieder durch die Abdeckungsaufnahme zurück geführt zu werden, sodass sich die Verbindung löst.

In dieser alternativen vorteilhaften Ausgestaltung führt im montierten Zustand also die Spannvorrichtung durch mindestens eine Abdeckungsaufnahme und das Befestigungselement durch mindestens eine Spannaufnahme, sodass eine temporäre Verbindung zwischen der Spannvorrichtung und dem Abdeckungselement besteht. Vorzugsweise ist dabei die mindestens eine Spannaufnahme derart ausgestaltet, dass ein Entfernen des Befestigungselements diese Verbindung löst.

Gemäß einer weiteren vorteilhaften Ausgestaltung eines Aspekts der Erfindung, umfasst die Vorrichtung ein an dem Abdeckungselement anbringbares, insbesondere verschließbares, erstes Aufbewahrungselement, ausgestaltet zur Aufnahme wenigstens eines Teils des Befestigungselements, insbesondere eines Teils des Befestigungselements, der nicht mehrschlaufig, insbesondere gehäkelt, ausgestaltet ist. Die Bezeichnung mehrschlaufig ausgestaltet, beziehungsweise mehrschlaufige Ausgestaltung, bezieht sich auf den Teil des Befestigungselements, der die mehreren Schlaufen umfasst.

Bei dem Aufbewahrungselement handelt es sich beispielsweise um eine vorzugsweise verschließbare Tasche, in der ein Teil des Befestigungselements aufbewahrt ist. Vorzugsweise handelt es sich dabei um einen Teil des Befestigungselements, der nicht die mehreren Schlaufen umfasst und das Abdeckungselement und die Spannvorrichtung reversibel an der Komponente der Windenergieanlage befestigt, sondern um einen weiteren Teil des Befestigungselements. Soll die Befestigung gelöst werden, kann vorzugsweise an diesem weiteren Teil gezogen werden, sodass sich die mehreren Schlaufen des Befestigungselements lösen. In anderen Worten sind die mehreren Schlaufen des Befestigungselements derart ausgestaltet, dass sie durch ein Ziehen am Befestigungselement gelöst werden. Um ein zufälliges Lösen der Schlaufen durch ein nicht vorgesehenes Ziehen am Befestigungselement zu verhindern, ist das Aufbewahrungselement zur Aufbewahrung insbesondere der Teile des Befestigungselements, die die mehreren Schlaufen nicht aufweisen, vorgesehen.

Gemäß einer weiteren vorteilhaften Ausgestaltung eines Aspekts der Erfindung, umfasst die Vorrichtung mindestens ein an dem Befestigungselement reversibel anbringbares Halterungselement, wobei das Halterungselement ausgestaltet ist, angebracht an dem Befestigungselement in dem montierten Zustand eine Auflösung der mehrschlaufigen Ausgestaltung des Befestigungselements zu verhindern.

Das Halterungselement ist an dem Befestigungselement reversibel anbringbar, also derart anbringbar, dass ein Entfernen des Halterungselements von dem Befestigungselement ohne Beschädigung des Befestigungselements erfolgt. Des Weiteren ist diese reversible Anbringung zur Lösung von dem Befestigungselement ausgestaltet. Beispielsweise handelt es sich bei dem Halterungselement um einen Karabiner oder eine Klammer.

Wie bereits mehrfach erläutert, sind die mehreren Schlaufen des Befestigungselements derart ausgestaltet, dass sie vorzugsweise durch ein Ziehen an dem Befestigungselement gelöst werden. Das Halterungselement ist nun derart ausgestaltet, dass es ein Lösen der Schlaufen, selbst bei einem Mechanismus, beispielsweise einem Ziehen an dem Befestigungselement, der die Schlaufen ohne das Halterungselement lösen würde, verhindert.

In einer beispielhaften Ausführung ist das Halterungselement als Plastikkarabiner ausgestaltet, durch den im montierten Zustand und angebracht an dem Befestigungselement eine der mehreren Schlaufen des Befestigungselements führt. Die Ausmaße des Plastickarabiners verhindern dabei, dass die Schlaufe durch eine weitere Schlaufe, durch die sie führt, gezogen werden kann. Somit kann diese Schlaufe selbst durch ein Ziehen nicht aufgelöst werden.

Das Halterungselement stellt somit eine Absicherung gegen ein ungewolltes Auflösen der Schlaufen und somit Lösen der reversiblen Befestigung der Vorrichtung dar.

Gemäß einer bevorzugten Variante der obigen Ausgestaltung umfasst die Vorrichtung ein Lösungselement, das dazu ausgestaltet ist, in einem Zustand, in dem das Halterungselement an dem Befestigungselement reversibel angebracht ist, ein Entfernen des Halterungselements von dem Befestigungselement zu ermöglichen.

Das Entfernen des Halterungselements von dem Befestigungselement löst dabei die reversible Anbringung des Halterungselements an dem Befestigungselement.

Gemäß dem obigen Beispiel ist das Lösungselement beispielsweise in Form eines Seils, einer Schnur oder eines Bandes dazu ausgestaltet das Halterungselement in Form eines Karabiners oder einer Klammer zu öffnen. In einem geöffneten Zustand kann der Karabiner, beziehungsweise die Klammer dann von dem Befestigungselement entfernt werden.

Das Lösungselement ist insbesondere an dem Halterungselement angeordnet, sodass beispielsweise durch ziehen des Lösungselements das Halterungselement zunächst von dem Befestigungselement gelöst und durch weiteres ziehen von dem Befestigungselement entfernt wird.

Vorzugsweise sind das Lösungselement als Seil, Band oder Schnur und ein freier Teil des Befestigungselements, das keine der mehreren Schlaufen umfasst, mit einer Länge ausgestaltet, die in einem Beispiel, in dem die Komponente ein Rotorblatt ist, bis zur Rotorblattwurzel reicht. Von dort aus kann in diesem Beispiel dann demnach zur Betätigung an dem Lösungselement gezogen werden, um ein Entfernen des Halterungselements zu ermöglichen. Die Entfernung des Halterungselements passiert in diesem Beispiel dann durch die Schwerkraft und/oder weiterem Ziehen an dem Lösungselement. Durch Ziehen an dem freien Teil des Befestigungselements lösen sich in diesem Beispiel dann die mehreren Schlaufen nach und nach auf, sodass die temporäre, beziehungsweise reversible, Befestigung der Vorrichtung ebenfalls aufgelöst wird.

Gemäß einer besonders bevorzugten Variante der obigen Ausgestaltung, handelt es sich bei dem Lösungselement um ein fernauslösendes Lösungselement, das insbesondere das Entfernen des Halterungselements von dem Befestigungselement aus einer Distanz von über 100 m, bevorzugt über 200 m, ermöglicht.

Unter fernauslösendem Lösungselement wird hierbei zunächst ein Lösungselement verstanden, das mit einem Abstand des Benutzers zum Halterungselement von dem Benutzer bedient werden kann. Beispielsweise ist das Halterungselement reversibel an einem Befestigungselement einer Vorrichtung zur reversiblen Befestigung einer Rotorblattabdeckung an einem Rotorblatt einer Windenergieanlage angebracht, wobei das Rotorblatt an der Windenergieanlage installiert ist, während sich der Benutzer am Fuße der Windenergieanlage befindet. Das fernauslösende Lösungselement ermöglicht es dem Benutzer auch über diese Distanz hin zur Vorrichtung, das Lösungselement zu betätigen, und somit ein Entfernen des Halterungselements zu ermöglichen. Der explizite Wert der Distanz von 100 m wurde aufgrund typischer Abmessungen einer Windenergieanlage, insbesondere einer typischen Höhe eines Turms einer Windenergieanlag gewählt. Größere Distanzen bringen dabei den Vorteil, dass das fernauslösende Lösungselement variabler einsetzbar ist.

In einer beispielhaften Ausführungsform ist ein fernauslösendes Lösungselement als besonders langes Seil oder Seilzugsystem mit einer Länge in der Dimension der Turmhöhe der Windenergieanlage ausgestaltet. Durch dieses Seil, beziehungsweise Seilzugsystem, wird beispielsweise ein Halterungselement in Form eines fernauslösenden Karabiners betätigt, sodass das Entfernen des Karabiners von dem Befestigungselement ermöglicht wird.

Besonders bevorzugt sind jedoch Ausführungsformen, in denen das fernauslösende Lösungselement mit einer drahtlosen Verbindung ausgestaltet ist. Dann umfasst das fernauslösende Lösungselement mindestens zwei separate Teile, einen Sender und einen Empfänger, wobei der Sender dazu ausgestaltet ist ein Signal an den Empfänger zu senden, und der Empfänger dazu ausgestaltet ist, ausgehend von dem Empfangen des Signals ein Entfernen des Halterungselements von dem Befestigungselement zu ermöglichen. Insbesondere ist der Empfänger dabei an oder in dem Halterungselement angeordnet.

Durch ein solches insbesondere drahtlose fernauslösende Lösungselement kann die Entfernung eines temporären Elements an einer Windenergieanlage im Gegensatz zu bisherigen Lösungen, für die ein Kran- oder Klettereinsatz erforderlich ist, deutlich vereinfacht und kostengünstiger ausgeführt werden.

Gemäß einer weiter besonders bevorzugten Variante der obigen Ausgestaltung, umfasst die Vorrichtung ein an dem Abdeckungselement anbringbares, insbesondere verschließbares, zweites Aufbewahrungselement, ausgestaltet zur Aufnahme wenigstens eines Teils des Lösungselements.

Das zweite Aufbewahrungselement ist beispielsweise als insbesondere verschließbare Tasche an dem Abdeckungselement ausgestaltet, mit einer Größe, sodass zumindest ein Teil des Lösungselements, beispielsweise ein Seilabschnitt oder im Fall eines drahtlosen fernauslösenden Lösungselements ein Empfänger und/oder ein Sender in die Tasche aufgenommen werden können.

Das zweite Aufbewahrungselement begünstigt somit nicht nur die Ordnung der Vorrichtung, sondern stellt auch einen Schutz für wenigstens einen Teil des Lösungselements, insbesondere bei einem Transport der Vorrichtung an der Komponente, dar.

Gemäß einer weiteren vorteilhaften Ausgestaltung eines Aspekts der Erfindung, umfasst die Spannvorrichtung mindestens ein elastisches Element.

Zur Spannung des Abdeckungselements um die Komponente der Windenergieanlage wird vorzugsweise dieses elastische Element gedehnt. Im montierten Zustand erstreckt sich das elastische Element vorzugsweise entlang einer Oberfläche der Komponente. Die durch Dehnung des elastischen Elements auftretende Kraft wird somit zur Spannung des Abdeckungselements genutzt.

Beispielsweise umfasst die Spannvorrichtung eine flächige oder lokale Elastizität als elastisches Element.

Gemäß einer weiteren vorteilhaften Ausgestaltung eines Aspekts der Erfindung, umfasst die Vorrichtung mindestens ein an dem Abdeckungselement anbringbares Schutzelement ausgestaltet zur wenigstens teilweisen Umschließung wenigstens eines Teils des Befestigungselements und/oder wenigstens eines Teils der Spannvorrichtung.

Durch die wenigstens teilweise Umschließung wenigstens eines Teils des Befestigungselements und/oder wenigstens eines Teils der Spannvorrichtung, stellt das Schutzelement einen Schutz des wenigstens einen Teils des Befestigungselements und/oder wenigstens einen Teils der Spannvorrichtung dar. Trotz der wenigstens teilweisen Umschließung hindert das Schutzelement weder die Funktion des Befestigungselements, noch die Funktion der Spannvorrichtung oder des Abdeckungselements.

Das Schutzelement ist an dem Abdeckungselement anbringbar ausgestaltet. Die Anbringung erfolgt insbesondere durch Kleben, Nähen, Tackern und/oder Knoten. In besonders bevorzugten beispielhaften Ausgestaltungen wird das Schutzelement bereits im Herstellungsprozess des Abdeckungselements an dem Abdeckungselement angeordnet und somit integral mit dem Abdeckungselement hergestellt.

Gemäß einer bevorzugten Variante der obigen Ausgestaltung, ist das mindestens eine Schutzelement als ein oder mehrere Klappen oder ein oder mehrere Laschen ausgestaltet und umfasst einen Verschluss, insbesondere ein oder mehrere Klettbänder oder ein oder mehrere Druckknöpfe.

Die Klappen oder Laschen sind dabei derart ausgestaltet, dass in einem geöffneten Zustand der Schutz des Schutzelements nicht vorhanden ist. In diesem Zustand ist es beispielsweise möglich, das Befestigungselement und/oder die Spannvorrichtung anzubringen oder zu justieren. Die Klappen oder Laschen hindern jedoch nicht die Funktionsweise des Befestigungselements oder der Spannvorrichtung. In einem geschlossenen Zustand, in dem die Klappen oder Laschen mit dem Verschluss, insbesondere der ein oder mehreren Klettbänder oder Druckknöpfe, verschlossen sind, besteht der Schutz des Befestigungselements und/oder der Spannvorrichtung durch das Schutzelement.

Gemäß einem zweiten Aspekt der Erfindung wird zur Lösung der Aufgabe ein Verfahren zur reversiblen Befestigung eines Abdeckungselements an einer Komponente einer Windenergieanlage im Stillstand, insbesondere eines Rotorblattes oder eines Turmes, bereitgestellt, wobei das Abdeckungselement an der Komponente anordenbar ausgestaltet ist und dazu ausgestaltet ist wenigstens einen Teil der Komponente abzudecken, umfassend: Anordnen einer Spannvorrichtung an dem Abdeckungselement, Anordnen der Spannvorrichtung und des Abdeckungselements an der Komponente der Windenergieanlage, Spannen des Abdeckungselements anhand der Spannvorrichtung um die Komponente der Windenergieanlage, Reversibles Befestigen der Spannvorrichtung und des Abdeckungselements an der Komponente der Windenergieanlage durch Anbringen eines Befestigungselements an der Spannvorrichtung und an dem Abdeckungselement, wobei eine reversible Befestigung der Spannvorrichtung und des Abdeckungselements an der Komponente der Windenergieanlage anhand des Befestigungselements durch eine ineinandergreifende Ausgestaltung von mehreren Schlaufen des Befestigungselements, insbesondere durch eine gehäkelte Ausgestaltung des Befestigungselements, bereitgestellt wird, wobei ineinandergreifend beschreibt, dass eine erste von zwei ineinandergreifend ausgestalteten Schlaufen durch eine zweite der zwei ineinandergreifend ausgestalteten Schlaufen führt.

Sämtliche vorteilhaften Ausgestaltungen und bevorzugten Varianten der Vorrichtung gemäß des ersten Aspekts der Erfindung finden entsprechend auch im Rahmen eines Verfahrens gemäß dem zweiten Aspekt der Erfindung Anwendung und führen ebenfalls zu den beschriebenen Vorteilen und Effekten.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung einer Windenergieanlage,
- Fig. 2: eine schematische Darstellung eines Windparks,
- Fig. 3: eine schematische Darstellung zur Illustration eines ersten Ausführungsbeispiels einer erfindungsgemäßen Vorrichtung,
- Fig. 4: eine schematische Darstellung zur Illustration eines zweiten Ausführungsbeispiels einer erfindungsgemäßen Vorrichtung,
- Fig. 5: eine schematische Darstellung zur Illustration eines dritten Ausführungsbeispiels einer erfindungsgemäßen Vorrichtung,
- Fig. 6: eine schematische Darstellung zur Illustration des dritten Ausführungsbeispiels in einer Seitenansicht,
- Fig. 7: ein schematisches Ablaufdiagramm eines Ausführungsbeispiels des erfindungsgemäßen Verfahrens.

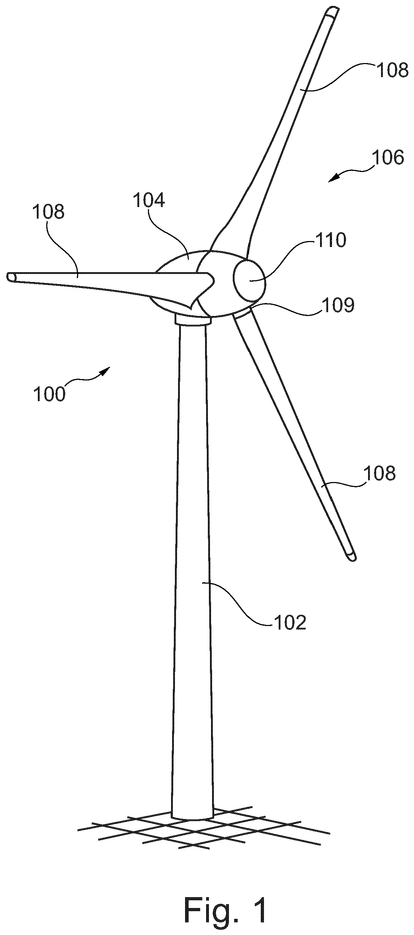

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

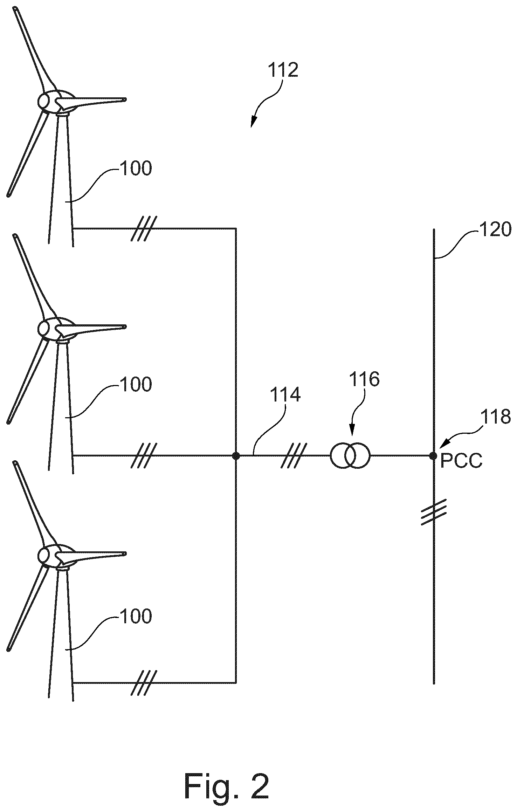

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergie-anlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

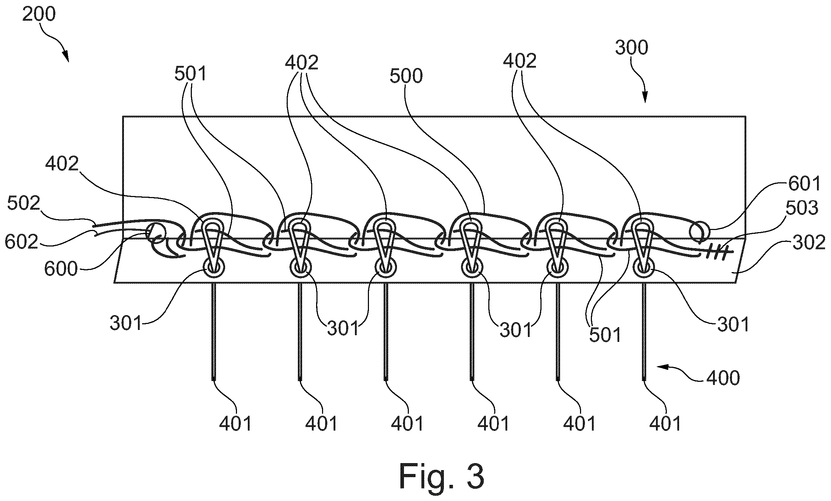

Figur 3 zeigt eine schematische Darstellung zur Illustration eines ersten Ausführungsbeispiels einer erfindungsgemäßen Vorrichtung. Das Abdeckungselement 300 umfasst sechs Abdeckungsaufnahmen 301. Die Abdeckungsaufnahmen 301 sind dabei an einer Lasche 302 des Abdeckungselements 300 angeordnet. Durch die Abdeckungsaufnahmen 301 führt je ein Seil 401 mit Schlaufe 402 einer Spannvorrichtung 400, das ebenso wir das Abdeckungselement 300 nicht in vollem Umfang gezeigt ist. Ebenfalls nicht gezeigt ist eine weitere Verbindungsstelle, an der die Spannvorrichtung 400 und das Abdeckungselement 300 verbunden sind. Diese zweite Verbindungsstelle ist nötig, um das Abdeckungselement um die Komponente der Windenergieanlage zu spannen.

An der gezeigten Verbindungsstelle wird die Spannvorrichtung 400 anhand der Schlaufen 402, die in diesem Beispiel Spannaufnahmen darstellen und durch je eine Abdeckungsaufnahme 301 führen, durch das Befestigungselement 500 an dem Abdeckungselement 300 temporär befestigt. Ohne das Befestigungselement 500 liegt an der gezeigten Verbindungsstelle zwischen Spannvorrichtung 400 und Abdeckungselement 300 keine Befestigung vor. Insbesondere können die Schlaufen 402 durch die Abdeckungsaufnahmen 301 geführt werden. Die gezeigte Größe der Schlaufen 402 kann beispielsweise durch Zusammendrücken verringert werden, sodass diese durch die Abdeckungsaufnahmen 301 in gezeigter Größe passen. Das Befestigungselement 500 verhindert demnach ein Herausführen der Schlaufen 402 aus den Abdeckungsaufnahmen 301. Wird das Befestigungselement 500 entfernt, besteht keine Befestigung zwischen Spannvorrichtung 400 und Abdeckungselement 300. Somit liegt in Figur 3 eine reversible Befestigung vor.

Das Befestigungselement 500 umfasst mehrere Schlaufen 501 sowie ein Ende 502, das einen freiten Teil des Befestigungselements 500 darstellt, das keine Schlaufen 501 umfasst. Das Befestigungselement 500 ist gehäkelt aus ineinandergreifenden Schlaufen 501 beziehungsweise Maschen ausgestaltet, derart, dass ein Ziehen an dem Ende 502 eine Auflösung der Schlaufen 501, eine nach der anderen, bewirkt. Um dies zu verhindern ist an dem Befestigungselement 500 ein Halterungselement 600 angebracht. Dieses Halterungselement 600 verhindert die Auflösung der Schlaufen 501, selbst bei einem Ziehen an dem Ende 502. Ebenso ist an dem Befestigungselement 500 ein Ringelement 601 angebracht, dass eine Auflösung der Schlaufen von einem Kopfende 503 des Befestigungselements her verhindert. Dieses Kopfende 503 ist an dem Abdeckungselement angenäht, geklebt oder anderweitig befestigt, um ebenfalls eine Auflösung der Schlaufen 501 vom Kopfende 503 her zu verhindern. Zusätzlich ist an dem Halterungselement 600 ein Lösungselement 602 in Form eine Schnur, beziehungsweise eines Seils, angebracht. Durch Ziehen an dem Lösungselement 602 öffnet sich das Halterungselement 600 und wird von dem Befestigungselement 500 entfernt. Anschließend kann durch ziehen an dem Ende 502 eine Auflösung der Schlaufen 501 und somit eine Aufhebung der reversiblen Befestigung herbeigeführt werden.

Zur besseren Veranschaulichung ist in den Figuren das Befestigungselement 500 locker gezeigt. Um eine bessere Befestigung bereitzustellen ist es jedoch in jeder gezeigten Ausführungsform möglich, das Befestigungselement 500 durch Ziehen an dem Ende 502 zu spannen. Hierbei verhindert das Halterungselement 600 ein Auflösen der Schlaufen 501.

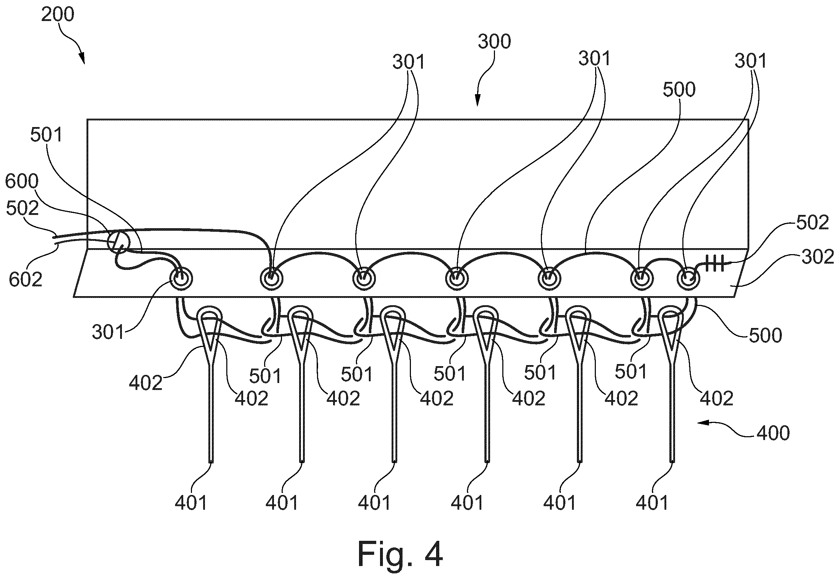

Figur 4 zeigt eine schematische Darstellung zur Illustration eines zweiten Ausführungsbeispiels einer erfindungsgemäßen Vorrichtung. Dieses zweite Ausführungsbeispiel unterscheidet sich von dem obigen ersten Ausführungsbeispiel in der Anordnung der Spannvorrichtung 400 sowie des Befestigungselements 500 an dem Abdeckungselement 300.

Das Abdeckungselement 300 umfasst in diesem Ausführungsbeispiel sieben Abdeckungsaufnahmen 301. Die Spannvorrichtung 400 umfasst sechs Seile 401 mit Schlaufen 402 an den Enden. Im Gegensatz zum ersten Ausführungsbeispiel sind hier die Schlaufen 402 nicht durch die Abdeckungsaufnahmen 301 geführt. Das Befestigungselement 500 hingegen führt sowohl durch die Abdeckungsaufnahmen 301, als auch durch die Schlaufen 402.

Auch in diesem Ausführungsbeispiel ist ein Halterungselement 600 mit Lösungselement 602 an dem Befestigungselement 500 angebracht. Ein Ringelement 601 ist in diesem Ausführungsbeispiel nicht erforderlich, da durch die Anordnung des Befestigungselements 500 sowie dem verankerten, festgenähtem Kopfende 503, bereits ein Auflösen der Schlaufen 501 vom Kopfende 503 her verhindert wird. Das Ringelement 601 kann in dieser Ausgestaltung allerdings auch zur Befestigung des Befestigungselements 500 herangezogen werden, beispielsweise anhand einer Verknotung mit dem Ringelement 601 oder einem Augspleiß, der durch das Ringelement 601 führt, alternativ oder zusätzlich zu der Vernähung 503. Auch in dieser Ausführungsform wird durch Ziehen an dem Lösungselement 602 das Halterungselement 600 von dem Befestigungselement 500 gelöst, sodass ein Ziehen an dem Ende 502 zu einer Auflösung der Schlaufen 501, nach und nach, und somit zu einem Lösen der reversiblen Befestigung führt.

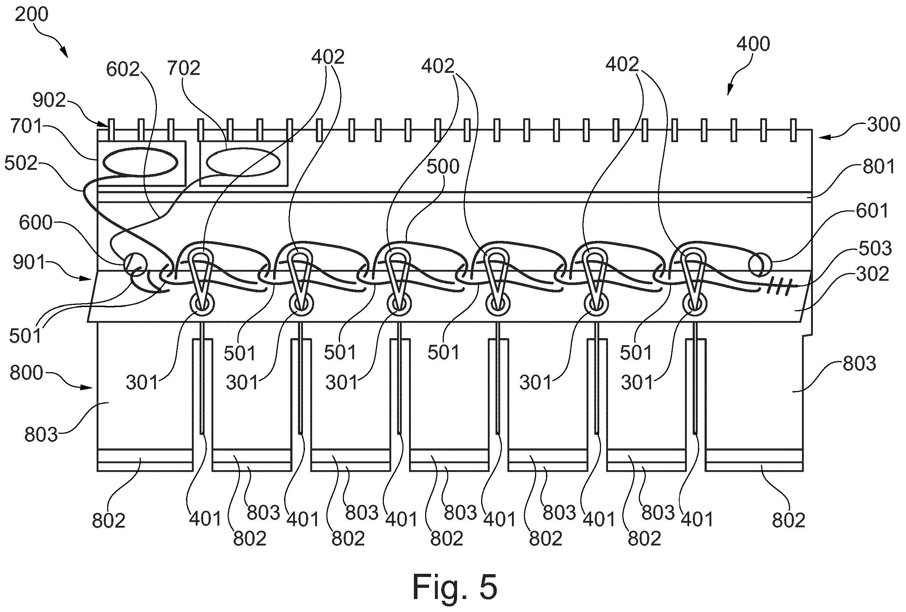

Figur 5 zeigt eine schematische Darstellung zur Illustration eines dritten Ausführungsbeispiels einer erfindungsgemäßen Vorrichtung. Bei diesem dritten Ausführungsbeispiel handelt es sich um eine Erweiterung des ersten Ausführungsbeispiels. Zusätzlich zu den Merkmalen des ersten Ausführungsbeispiels, weist das dritte Ausführungsbeispiel aus Figur 5 ein erstes Aufbewahrungselement in Form einer ersten Tasche 701, sowie ein zweites Aufbewahrungselement in Form einer zweiten Tasche 702 auf. In der ersten Tasche 701 ist das Ende 502 mit weiteren Teilen des Befestigungselements 500 aufbewahrt, die keine Schlaufen 501 aufweisen. In der zweiten Tasche 702 ist ein Teil des Lösungselements 602 aufbewahrt.

Zusätzlich ist an dem Abdeckungselement ein Schutzelement 800 angebracht. Das Schutzelement 800 umfasst einen durchgehenden Klettstreifen 801 auf einer Seite des Abdeckungselements sowie entsprechende Klett-Gegenstücke 802 in Form von Streifen an den Laschen 803. Gezeigt ist ein geöffneter Zustand des Schutzelements 800. In diesem Zustand besteht der Schutz des Befestigungselements 500 sowie der Schlaufen 402 nicht.

Darüber hinaus ist in Figur 5 die zweite Verbindungsstelle 902 zwischen Spannvorrichtung 400 und Abdeckungselement 300 gezeigt. Die Spannvorrichtung 400 erstreckt sich um einen Umfang der Komponente der Windenergieanlage und ist an dieser zweiten Verbindungsstelle 902 mit dem Abdeckungselement 300 verbunden, beispielsweise zusammen genäht, geklebt, geknotet oder getackert. Die Spannvorrichtung 400 erstreckt sich demnach um den Umfang der Komponente von der ersten Verbindungsstelle 901 mit dem Abdeckungselement 300 bis hin zur zweiten Verbindungsstelle 902 mit dem Abdeckungselement 300.

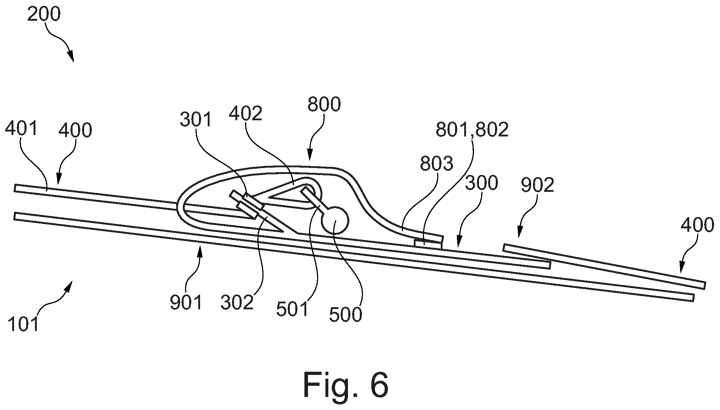

Figur 6 zeigt eine Illustration des dritten Ausführungsbeispiels in einer Seitenansicht, beziehungsweise Querschnittsansicht. Gezeigt ist die erste Verbindungsstelle 901 und die zweite Verbindungsstelle 902, sowie ein Seil 401 mit Schlaufe 402, eine Abdeckungsaufnahme 301, eine Schlaufe 501 und eine Lasche 801 in einem geschlossenen Zustand, indem der Schutz durch das Schutzelement besteht und der Klettverschluss geschlossen ist.

Ebenfalls ist die Komponente 101 der Windenergieanlage angedeutet, entlang deren Oberfläche sich die Spannvorrichtung 400 sowie das Abdeckungselement 300 erstreckt. Bei der Komponente 101 handelt es sich beispielsweise um ein Rotorblatt 108 oder einen Abschnitt des Turms 102.

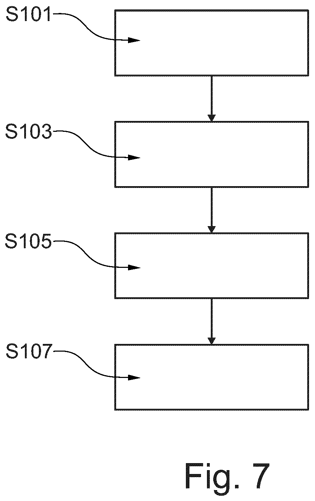

Figur 7 zeigt ein schematisches Ablaufdiagramm eines Ausführungsbeispiels des erfindungsgemäßen Verfahrens.

Ein Verfahrensschritt S101 umfasst dabei ein Anordnen einer Spannvorrichtung an dem Abdeckungselement.

Ein darauf folgender Verfahrensschritt S103 umfasst ein Anordnen der Spannvorrichtung und des Abdeckungselements an der Komponente der Windenergieanlage.

Ein weiterer darauf folgender Verfahrensschritt S105 umfasst ein Spannen des Abdeckungselements anhand der Spannvorrichtung um die Komponente der Windenergieanlage.

Ein weiterer darauf folgender Verfahrensschritt S107 umfasst ein Reversibles Befestigen der Spannvorrichtung und des Abdeckungselements an der Komponente der Windenergieanlage durch Anbringen eines Befestigungselements an der Spannvorrichtung und an dem Abdeckungselement, wobei eine reversible Befestigung der Spannvorrichtung und des Abdeckungselements an der Komponente der Windenergieanlage anhand des Befestigungselements durch eine ineinandergreifende Ausgestaltung von mehreren Schlaufen des Befestigungselements, insbesondere durch eine gehäkelte Ausgestaltung des Befestigungselements, bereitgestellt wird, wobei ineinandergreifend beschreibt, dass eine erste von zwei ineinandergreifend ausgestalteten Schlaufen durch eine zweite der zwei ineinandergreifend ausgestalteten Schlaufen führt.

Das Verfahren ist nicht auf diese Verfahrensschritte beschränkt. Weitere Ausgestaltungen eines erfindungsgemäßen Verfahrens umfassen zusätzliche Verfahrensschritte vor, zwischen und/oder nach den explizit aufgeführten Verfahrensschritten, wie beispielsweise einen Schritt des Herstellens der Spannvorrichtung, des Abdeckungselements und/oder des Befestigungselements.

### Bezugszeichen:

- 100: Windenergieanlage
- 101: Komponente der Windenergieanlage
- 102: Turm
- 104: Gondel
- 106: Rotor
- 108: Rotorblatt
- 109: Rotorblattwurzel
- 110: Spinner
- 112: Windpark
- 114: Parknetz
- 116: Transformator
- 118: Einspeisepunkt
- 120: Versorgungsnetz
- 200: Vorrichtung zur reversiblen Befestigung
- 300: Abdeckungselement
- 301: Abdeckungsaufnahme
- 302: Lasche
- 400: Spannvorrichtung
- 401: Seil
- 402: Schlaufe der Spannvorrichtung
- 500: Befestigungselement
- 501: Schlaufe des Befestigungselements
- 502: Ende
- 503: Kopfende
- 600: Halterungselement
- 601: Ringelement
- 602: Lösungselement
- 701: erste Tasche
- 702: zweite Tasche
- 800: Schutzelement
- 801: durchgehender Klettstreifen
- 802: Klettgegenstück
- 803: Lasche
- 901: erste Verbindungsstelle
- 902: zweite Verbindungsstelle

## Patentansprüche

1. Vorrichtung (200) zur reversiblen Befestigung eines Abdeckungselements (300) an einer Komponente (101) einer Windenergieanlage (100) im Stillstand, insbesondere eines Rotorblattes (108) oder eines Turmes (102), wobei das Abdeckungselement (300) an der Komponente (101) anordenbar ausgestaltet ist und dazu ausgestaltet ist wenigstens einen Teil der Komponente (101) abzudecken, umfassend
eine an dem Abdeckungselement (300) anordenbare Spannvorrichtung (400), und
ein flexibles Element ausgestaltet als Befestigungselement (500) zur reversiblen Befestigung der Spannvorrichtung (400) und des Abdeckungselements (300) an der Komponente (101) der Windenergieanlage (100), wobei in einem montierten Zustand die reversible Befestigung besteht,
wobei
die Spannvorrichtung (400) ausgestaltet ist das Abdeckungselement (300) in dem montierten Zustand um die Komponente der Windenergieanlage (100) zu spannen, und
das Befestigungselement (500) mehrere Schlaufen (501) umfasst, wobei in dem montierten Zustand die mehreren Schlaufen (501) wenigstens teilweise ineinandergreifend, insbesondere gehäkelt, ausgestaltet sind, wobei ineinandergreifend beschreibt, dass eine erste von zwei ineinandergreifend ausgestalteten Schlaufen (501) durch eine zweite der zwei ineinandergreifend ausgestalteten Schlaufen (501) führt.

2. Vorrichtung (200) nach Anspruch 1, wobei das Abdeckungselement (300) mindestens eine Abdeckungsaufnahme (301) umfasst,
wobei das Befestigungselement (500) in der mindestens einen Abdeckungsaufnahme (301) aufnehmbar ausgestaltet ist, derart, dass in dem montierten Zustand das Befestigungselement (500) durch die mindestens eine Abdeckungsaufnahme (301) führt.

3. Vorrichtung (200) nach Anspruch 2, wobei die Spannvorrichtung (400) mindestens eine Spannaufnahme (402) umfasst, wobei das Befestigungselement (500) in der mindestens einen Spannaufnahme (402) der Spannvorrichtung (400) aufnehmbar ausgestaltet ist, derart, dass in dem montierten Zustand das Befestigungselement (500) durch die mindestens eine Spannaufnahme (402) der Spannvorrichtung (400) führt.

4. Vorrichtung (200) nach Anspruch 1, wobei das Abdeckungselement (300) mindestens eine Abdeckungsaufnahme (301) umfasst,
wobei die Spannvorrichtung (400) in der mindestens einen Abdeckungsaufnahme (301) aufnehmbar ausgestaltet ist, derart, dass in dem montierten Zustand die Spannvorrichtung (400) durch die mindestens eine Abdeckungsaufnahme (301) führt und die Spannvorrichtung (400) mindestens eine Spannaufnahme (402) umfasst, wobei das Befestigungselement (500) in der mindestens einen Spannaufnahme (402) der Spannvorrichtung (400) aufnehmbar ausgestaltet ist, derart, dass in dem montierten Zustand das Befestigungselement (500) durch die mindestens eine Spannaufnahme (402) der Spannvorrichtung (400) führt.

5. Vorrichtung (200) nach einem der vorstehenden Ansprüche, umfassend ein an dem Abdeckungselement (300) anbringbares, insbesondere verschließbares, erstes Aufbewahrungselement (701), ausgestaltet zur Aufnahme wenigstens eines Teils des Befestigungselements (500), insbesondere eines Teils des Befestigungselements (500), der nicht mehrschlaufig, insbesondere gehäkelt, ausgestaltet ist.

6. Vorrichtung (200) nach einem der vorstehenden Ansprüche, umfassend mindestens ein an dem Befestigungselement (500) reversibel anbringbares Halterungselement (600), wobei das Halterungselement (600) ausgestaltet ist, angebracht an dem Befestigungselement (500) in dem montierten Zustand eine Auflösung der mehrschlaufigen Ausgestaltung des Befestigungselements (500) zu verhindern.

7. Vorrichtung (200) nach Anspruch 6, umfassend ein Lösungselement (602), dazu ausgestaltet in einem Zustand, in dem das Halterungselement (600) an dem Befestigungselement (500) reversibel angebracht ist, ein Entfernen des Halterungselements (600) von dem Befestigungselement (500) zu ermöglichen.

8. Vorrichtung nach Anspruch 7, wobei es sich bei dem Lösungselement (602) um ein fernauslösendes Lösungselement (602) handelt, das insbesondere das Entfernen des Halterungselements (600) von dem Befestigungselement (500) aus einer Distanz von über 100 m, bevorzugt über 200 m, ermöglicht.

9. Vorrichtung (200) nach einem der Ansprüche 7 und 8, umfassend ein an dem Abdeckungselement (300) anbringbares, insbesondere verschließbares, zweites Aufbewahrungselement (702), ausgestaltet zur Aufnahme wenigstens eines Teils des Lösungselements (602).

10. Vorrichtung (200) nach einem der vorstehenden Ansprüche, wobei die Spannvorrichtung (400) mindestens ein elastisches Element umfasst.

11. Vorrichtung (200) nach einem der vorstehenden Ansprüche, umfassend mindestens ein an dem Abdeckungselement (300) anbringbares Schutzelement (800) ausgestaltet zur wenigstens teilweisen Umschließung wenigstens eines Teils des Befestigungselements (500) und/oder wenigstens eines Teils der Spannvorrichtung (400).

12. Vorrichtung (200) nach Anspruch 11, wobei das mindestens eine Schutzelement (800) als ein oder mehrere Klappen oder ein oder mehrere Laschen (803) ausgestaltet ist und einen Verschluss, insbesondere ein oder mehrere Klettbänder (801, 802) oder ein oder mehrere Druckknöpfe, umfasst.

13. Verfahren zur reversiblen Befestigung eines Abdeckungselements (300) an einer Komponente (101) einer Windenergieanlage (100) im Stillstand, insbesondere eines Rotorblattes (108) oder eines Turmes (102), wobei das Abdeckungselement (300) an der Komponente (101) anordenbar ausgestaltet ist und dazu ausgestaltet ist wenigstens einen Teil der Komponente (101) abzudecken, umfassend:
Anordnen einer Spannvorrichtung (400) an dem Abdeckungselement (300),
Anordnen der Spannvorrichtung (400) und des Abdeckungselements (300) an der Komponente (101) der Windenergieanlage (100),
Spannen des Abdeckungselements (300) anhand der Spannvorrichtung (400) um die Komponente (101) der Windenergieanlage (100),
Reversibles Befestigen der Spannvorrichtung (400) und des Abdeckungselements (300) an der Komponente (101) der Windenergieanlage (100) durch Anbringen eines Befestigungselements (500) an der Spannvorrichtung (400) und an dem Abdeckungselement (300), wobei eine reversible Befestigung der Spannvorrichtung (400) und des Abdeckungselements (300) an der Komponente (101) der Windenergieanlage (100) anhand des Befestigungselements (500) durch eine ineinandergreifende Ausgestaltung von mehreren Schlaufen (501) des Befestigungselements (500), insbesondere durch eine gehäkelte Ausgestaltung des Befestigungselements (500), bereitgestellt wird, wobei ineinandergreifend beschreibt, dass eine erste von zwei ineinandergreifend ausgestalteten Schlaufen (501) durch eine zweite der zwei ineinandergreifend ausgestalteten Schlaufen (501) führt.
